## Europäisches Patentamt

## European Patent Office

## Office européen des brevets

(11) Publication number:

# 0 139 080
# B1

# EUROPEAN PATENT SPECIFICATION

(45) Date of publication of patent specification: 30.08.89

(21) Application number: 84105306.9

(22) Date of filing: 19.02.81

(60) Publication number of the earlier application in accordance with Art. 76 EPC: 0 036 093

(51) Int. Cl.⁴: **G 06 F 9/38,** G 06 F 13/00, G 06 F 11/00

(54) An information-processing system.

(30) Priority: 25.02.80 JP 22489/80
11.03.80 JP 30531/80
11.03.80 JP 30532/80

(43) Date of publication of application:
02.05.85 Bulletin 85/18

(45) Publication of the grant of the patent:
30.08.89 Bulletin 89/35

(84) Designated Contracting States:
DE FR GB

(56) References cited:
EP-A-0 010 188
FR-A-2 336 735

IBM TECHNICAL DISCLOSURE BULLETIN, vol. 14, no. 12, May 1972, pages 3599-3611, New York, US; B.O. BEEBE et al.: "Instruction sequencing control"

IBM TECHNICAL DISCLOSURE BULLETIN, vol. 18, no. 1, June 1975, page 168, New York, US; L.F. GIACCONE: "Tester for date processing system"

(73) Proprietor: KABUSHIKI KAISHA TOSHIBA
72, Horikawa-cho Saiwai-ku
Kawasaki-shi Kanagawa-ken 210 (JP)

(72) Inventor: Kinoshita, Tsuneo
2-21-18, Fujimoto
Kokubunji-shi Tokyo (JP)
Inventor: Sato, Fumitaka
4-18-3, Imadera
Ome-shi Tokyo (JP)
Inventor: Yamazaki, Isamu
1-6-1, Haginuma
Takatsu-ku Kawasaki-shi (JP)

(74) Representative: Henkel, Feiler, Hänzel & Partner
Möhlstrasse 37
D-8000 München 80 (DE)

(56) References cited:
IBM TECHNICAL DISCLOSURE BULLETIN, vol. 10, no. 2, July 1967, pages 125-126, New York, US; D.W. ANDERSON et al.: "Instruction prefetching interlock"

IEEE TRANSACTIONS ON COMPUTERS, vol. C-22, no. 2, February 1973, pages 143-148, New York, US; J.M. KURTZBERG et al.: "A balanced pipelining approach to multiprocessing on an instruction stream level"

## Description

This invention relates to information processing system consisting of arithmetic control units having function of controlling the prefetching of user's instructions from main memory and, more particularly, a unit of this type which is formed as a single large-scale semiconductor integrated circuit chip.

Owing to recent advancement of semiconductor techniques, the arithmetic control unit which constitutes a major part of an information processing system can be provided as a single very large scale integrated semiconductor element (hereinafter referred to as VLSI). With the implementation of the arithmetic control unit with VLSI, improvement of reliability, increased compactness and improvement of price versus performance ratio can be expected. Meanwhile, for implementation with VLSI there are such problems as the control of package pin number limitations on power consumed and limitations upon capacity of accommodation and performance. To solve these problems, the future development of techniques of applying the VLSI of this kind is of a great concern. Of these technical problems, this invention relates to the problems of limitations imposed upon the accommodation capacity and performance.

Another aspect, in an arithmetic control unit formed as a single chip (hereinafter referred to as one-chip CPU) as mentioned above, in which a plurality of internal instruction prefetch buffer stages are provided in order to reduce time required for the instruction fetch from an external main memory and permit high speed processing problems in the address stop timing are posed by an address matching mechanism that is provided outside the chip. Such an address matching mechanism functions such that when the one-chip CPU makes access to a memory address preset by the operator or the like, it produces an interruption instruction to stop the programm being under execution by detecting the coincidence of addresses, and it is used when it is desired to interrupt a programm in a desired step. This means that for the mechanism to be useful, the execution stop is to be brought about upon detection of the coincidence of addresses when the one-chip CPU is about to execute the data processing contents in the preset address. With the construction as described above, however, the one-chip CPU always undertakes the prefetch, so that it is possible that the coincidence of addresses is detected at the time when access is made to the main memory for prefetching an instruction. At such time, the data or instruction in the memory address made access to by the one-chip CPU is actually a prefetch instruction which is not executed yet (i.e., an instruction stored in prefetch instruction buffers). Therefore, if an address stop is about at the timing of the detection of the coincidence of addresses, this timing is not proper, that is, the proper address matching function is not fulfilled. Properly, it is necessary to produce an interruption in the case of coincidence of addresses at the timing at which a prefetch instruction is put to execution, i.e., at which the instruction is taken out from the prefetch instruction buffers. Thus, it has been desired to effectively realize an address matching section, which can be about an address stop at the proper timing, within the physical restriction imposed upon the chip.

In a further aspect, in a one-chip CPU, in addition to providing a plurality of internal instruction prefetch buffer stages in order to reduce time required for instruction fetch from an external main memory and permit high speed processing, it is thought to provide an external address conversion mechanism (address conversion table- for expanding the address space of the main memory. In such a construction, when a segment in the address conversion table is specified according to logic address data from the one-chip CPU, the main memory may be made access to according to a physical address corresponding to the specified segment. In such a case, if the segment is not defined so that it should not be used (i.e., if a non-defined address is specified), it is necessary to decide that it is inadequate to make access to the main memory at this time. Since the one chip CPU undertakes prefetching of instructions as mentioned earlier, it is already storing some prefetch instructions in its internal prefetch instruction buffers for execution. Therefore, it happens that the timing of judging the non-defined address at the time of the consultation of the address conversion table for taking out an instruction word from the main memory and the timing at which that instruction is actually taken out from the buffers and put to execution are different from each other. This means that even if an illegal address is detected by consultation of the address conversion table, the production of an illegal address interruption at this time is not proper in timing.

Accordingly, in such a construction the one-chip CPU is required to include a mechanism for normalizing the timing of generation of the illegal address, and means for effectively realizing such mechanism within the physical limitations imposed upon the chip is required.

An object of the invention is to provide an arithmetic control unit formed into a one-chip type by application of a highly integrated semiconductor with which address stop by an external address matching mechanism can be brought about always at a proper timing without need of assigning connection pins for the address matching mechanism. A further object of the invention is to provide an arithmetic control unit formed into a one-chip type by application of a highly integrated semiconductor device provided with a plurality of prefetch instruction buffer stages inside the chip and with an address conversion mechanism outside the chip, with which externally produced discrimination data indicating the adequateness of making access to the main memory can be coupled to it without need of any connection pin peculiar to that data for permitting an illegal address interruption based upon that data to be produced at a proper timing.

According to the invention it is possible to provide an arithmetic control unit formed into a one-chip type by application of highly integrated semiconductor device including a plurality of prefetch instruction buffer stages and capable of permitting an execution stop by an external execution stop mechanism to be brought about always at a proper timing without need of assigning any connection pins to the execution stop mechanism.

Further, according to the invention it is possible to provide an arithmetic control unit formed into a one-chip type by application of highly integrated semiconductor device including a plurality of prefetch instruction buffer stages, and with which an external address conversion mechanism capable of permitting the generation of an illegal address interruption always at a proper timing can be effectively realized within physical restrictions imposed upon the chip.

The above and other objects, features and advantages are apparent from the following description taken in connection with the accompanying drawings, in which:

Fig. 1 is a schematic view illustrating the concept of the general instruction prefetch;

Fig. 2 is a block diagram showing the basic construction of a one-chip arithmetic control unit embodying the invention and its peripheral circuitry;

Fig. 3 is a detailed block diagram showing the construction outlined in Fig. 2;

Fig. 4 is a detailed block diagram showing AM signal transfer path inside the one-chip CPU shown in Fig. 3;

Fig. 5 is a schematic block diagram showing the state (state of storage of instruction and location) of some parts of the one-chip CpU of Fig. 3 at the time of writing data in main memory;

Fig. 6 is a view illustrating a microprogram for executing a write instruction used with an embodiment of the invention.

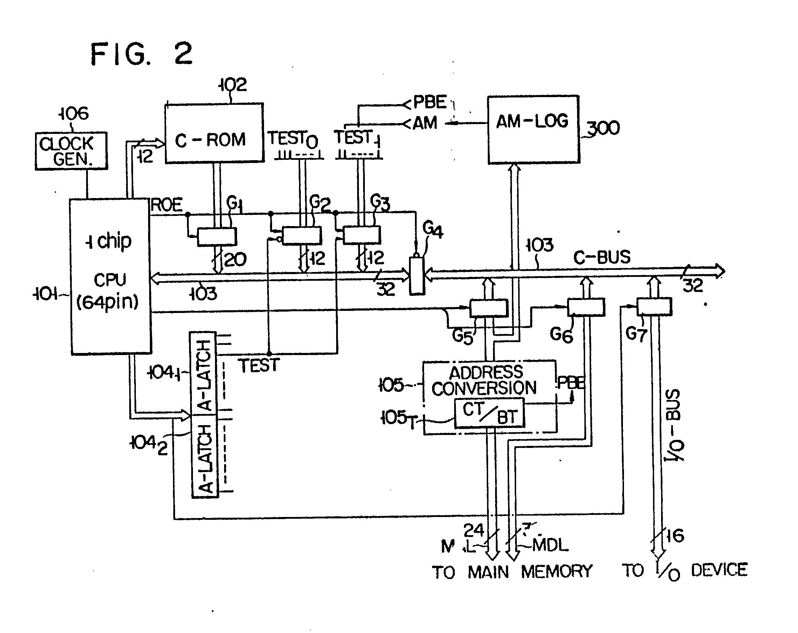

Now, an embodiment of the invention will be described with reference to the accompanying drawings. Fig. 2 shows a block diagram of the basic construction of a one-chip arithmetic control circuit which constitutes the subject matter of the invention and peripheral circuitry. Referring to the Figure, designated at 101 is a central processing circuit (hereinafter referred to as one-chip CPU) constituted by a very large-scale semiconductor integration chip (VLSI), with 64 external-connection pins provided on one package. Desingated at 102 is an external control memory (hereinafter referred to as C-ROM) in which microprograms for controlling the one-chip CPU 101 are stored. Designated at 103 is a 32-bit common bus (hereinafter referred to as C-bus) through which the one-chip CPU 101 is coupled to external units. The output data (microinstructions), memory address data, memory data, I/O (input/output) data, etc. from the C-ROM 102 are transferred through a common bus (hereinafter referred to as C-BUS) 103 on time division basis. Designated at $104_1$ and $104_2$ are addressable latch circuits, which are provided outise the one-chip CPU 101 and have decoding function. They produce various external control signals in accordance with control signals produced from the one-chip CPU 101. Designated at 105 is an address conversion unit provided for expanding the address space of the main memory. It provides physical addresses by consulting with a conversion table $105_T$ according to logic addresses and segment information transferred from the one-chip CPU 101 through the C-BUS 103. When producing physical address data, a one-bit PBE signal indicating whether the specified segment is non-defined is also produced from the conversion table $105_T$. The address conversion unit 105 provides different functions depending upon two different external setting signals (BTMD, CTMD) specifying address conversion systems. One of these functions is an address conversion function by base modification, and the other is an address conversion function by page modification. The conversion table $105_T$ which constitutes a main part of the address conversion unit 105 is used in different ways (of partitioning register) in the case of the base modification and in the case of the page modification. When the table is used in the case of the base modification, it is referred to as BT (base address table) while in the case of the page modification it is referred to as CT (conversion table).

Designated at 106 is a clock generator for producing a basic clock signal for the one-chip CPU 101. Designated at $G_1$ to $G_7$ are gate circuits for controlling data transfer through the C-BUS 103. When a microinstruction (20 bits) read out from the C-ROM 102 is transferred through the C-BUS 103 to the one-chip CPU 101 with the gate circuit $G_1$ closed by a control signal (ROE) from the one-chip CPU 101, the gate circuit $G_4$ is closed to separate the C-BUS 103 with respect to it. When the gate circuit $G_1$ is opened, one of the gate circuits $G_2$ and $G_3$ is selectively closed. An external signal group (12 bits) TEST 0 from the gate circuit $G_2$, which is opened at the time of the initialization, and also an external signal group (12 bits) TEST 1 from the gate circuit $G_3$, which is opened at the time of the ordinary program reading, are transferred through the C-BUS 103 together with microinstruction from the C-ROM 12 to the one-chip CPU 101. The external signal group TEST 1 includes the PBE signal produced from the conversion table $105_T$ and a one-bit AM signal produced from an address matching logic unit (hereinafter referred to as AM-LOG) 300 which is provided outside the one-chip CPU 101. When the afore-mectioned microprogram reading cycle is not in force, the gate circuit $G_4$ is opened while the gate circuits $G_5$, $G_6$ and $G_7$ are selectively opened for data transfer between the one-chip CPU 101 on one hand and the address conversion unit 105, main memory section and other input/output units on the other hand

through the C-BUS 103 and various buses connected thereto. Designated at MAL is a memory address line contained in the memory bus, and at MDL a memory data line in the bus. The AM-LOG 300 compares a memory address wanted to be stopped (here a logic address), as preset by a switching operation or the like, and a memory address (logic address) when the one-chip CPU 101 makes access to the main memory and produces a one-bit AM signal (of level "1") if the compared addressed coincide.

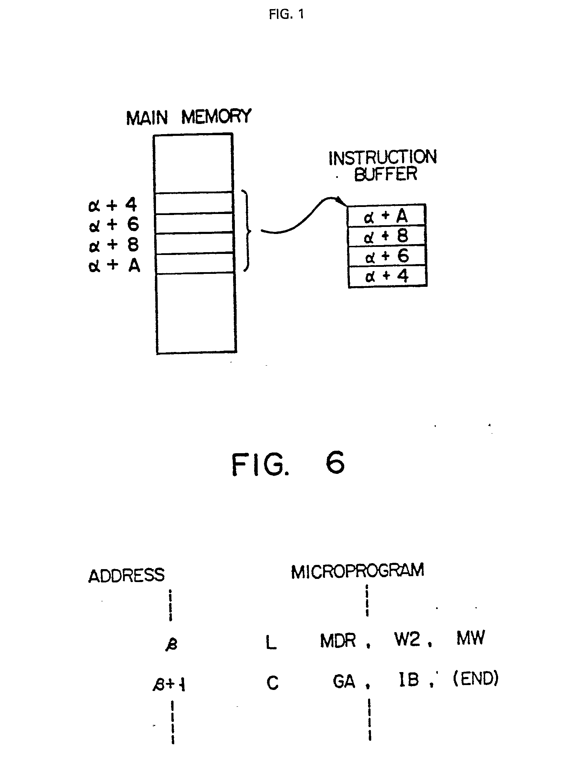

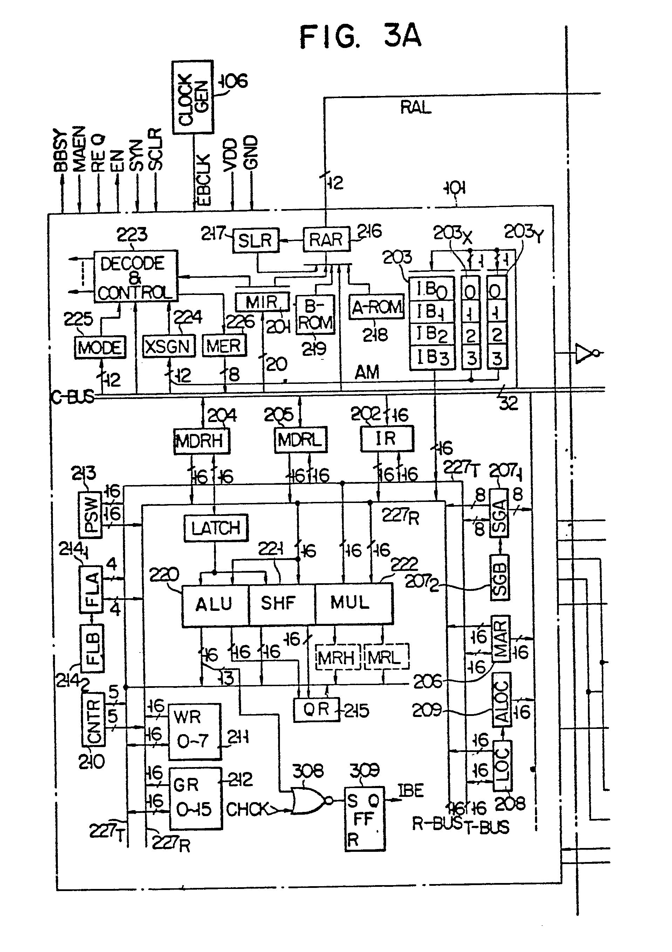

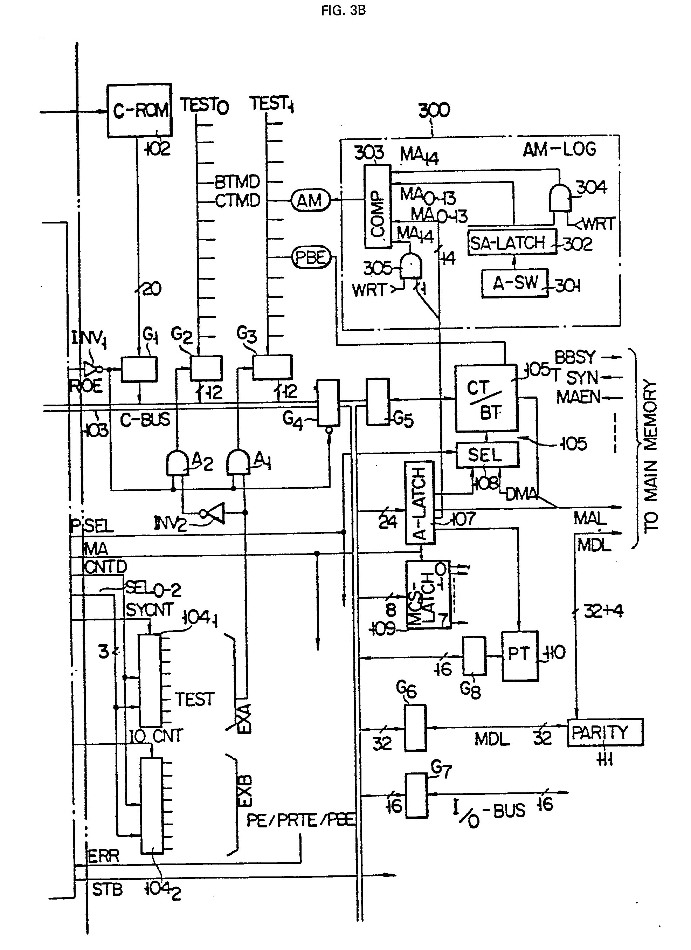

Figs. 3A and 3B show a block diagram of the detailed construction of the unit shown in Fig. 1. The one-chip CPU 101 is connected to the external circuits by its 64 terminals (pins) including those connected to the 32-bit C-BUS, and the following logics are accommodated in the chip.

(1) MIR (microinstruction register)
 ... 201    20 bits

This register stores microinstructions read out from the C-ROM 102; microinstructions read out from the C-ROM 102 are set in the register 201 through the C-BUS 103.

(2) IR (instruction register)
 ... 202    16 bits

This register holds a user's instruction being executed. User's instruction, when read out from an instruction buffer ($IB_{0-3}$) 203, in which user's instructions prefeteched are stored, are transferrd to the IR 202.

(3) $IB_{0-3}$ (instruction buffer)
 ... 203    16 bits×4

This register prefetches user's instructions. When a user's instruction in the IR 202 is executed, the next user's instruction is transferred from the $IB_{0-3}$ 203 to the IR 202. Data in the $IB_{0-3}$ 203 can be output to internal buses (T-BUS and R-BUS) $227_T$ and $227_R$ according to a microinstruction, but writing of data from the T-BUS $227_T$ or R-BUS $227_R$ cannot be made. Writing of user's instructions in the $IB_{0-3}$ 203 is done through the C-BUS 103.

As subordinary register to the $IB_{0-3}$ 203, particular signal memory sections ($AM/PBE_{0-3}$) 203x, 203y having four one-bit stages each corresponding to each (of four) stage of the $IB_{0-3}$ 203 is provided. At a main memory access time of prefetching an instruction word, one-bit AM (address match) signal output from the AM-LOG 300 is stored in the same stage of the $AM_{0-3}$ 203x in a given correspondence relation to the prefeteched instruction word. The prefetched instruction word is transferred from the $IB_{0-3}$ 203 to the IR 202, and the AM signal corresponding to the prefetched instruction word is read out in synchronism to the timing of reading the instruction from the $IB_{0-3}$ 203 for execution (IBF timing). The AM signal read out from the $AM_{0-3}$ 203x is stored in an external signal register (XSGN) 224 to be described later in a previously assigned position thereof. In the $PBE_{0-3}$ 203y, a one-bit signal representing the pertinence of the main memory access, produced from the address conversion section 105 at the time of making access to the main memory for prefetching an instruction word, is stored in a given corresponding relation to the prefetched instruction word; more particularly, a one-bit PBE (physical block error) signal containing information as to whether a segment specified by consultation with the conversion table $105_T$ is non-defined is stored when logic-physical address conversion is made at the main memory access time for prefetching the instruction word. The PBE signal corresponding to the prefetched instruction word is read out at the timing, at which the intruction word is read-out from the $IB_{0-3}$ 203 and transferred to the IR 202. The PBE signal read out from the $PBE_{0-3}$ 203y is stored in the XSGN 224 in a previously assigned position thereof.

(4) MDRH (memory data register high)
 ... 204    16 bits

This register serves to hold the upper 16 bits of 32-bit data on the C-BUS 103. It can store data from the C-BUS 103 and output data thereto. Further, it can output data to the R-BUS $227_R$ and T-BUS $227_T$ and store data from the T-BUS $227_T$.

(5) MDRL (memory data register low)
 ... 205    16 bits

This register serves to hold the lower 16 bits of the 32-bit data on the C-BUS 103. It can store data from the C-BUS 103 and output data thereto. It also output data to the R-BUS $227_R$ and T-BUS $227_T$ and store data from the T-BUS $227_T$.

(6) MAR (memory address register)
 ... 206    16 bits

This register serves to hold the main memory address (logic address). The address data of MAR 206 and 8-bit data of segment register which holds segment data are output as 24-bit address data to the C-BUS 103. Since the C-BUS 103 is used on a time division basis as mentioned earlier, the A-LATCH 107 is provided outside the chip, and the address data mentioned above is latched thereby. In The MAR 206, "2" or "4" is counted as a unit.

(7) SGA, SGB (segment register A, B)
 ... $207_1$, $207_2$    8 bits×2

These registers are provided for expanding the logic address space, and data for specifing segments in the externally provided conversion table $105_T$ are stored in them. The contents of the registers $207_1$ or $207_2$ and the content of the MAR 206 constitute a source of physical addresses. The SGB $207_2$ is temporarily used for particular instructions.

(8) LOC (location counter)
 ... 208    16 bits

This counter holds user's instruction addresses. Every time a user's instruction is fetched out, it adds "2" to its count and holds the next user's instruction.

(9) ALOC (advanced location counter)
... 209    16 bits
This register holds the address of a user's instruction to be read out from the main memory. For the purpose of control of the instruction prefetch, its contents is leading the address held in the LOC 208 by +2 or +4 bytes.

(10) CNTR (counter register)
... 210    8 bits
This counter is a binary down-counter used for loop counting of microprograms, multiplication, division and shifting.

(11) WR$_{0-7}$ (working register)
This register is used for holding intermediate results in a microprogram. It can be directly specified as a source or destination register by a microinstruction.

(12) GR$_{0-15}$ (general register)
... 212    16 bits×16
These registers can be made access to as general registers by user's instructions. They can be used as accumulators and index registers.

(13) PSW (program status word)
... 213    16 bits
In this register, the status of the one-chip CPU is memorized. It holds interruption mask, internal operation result state, memory address mode, master slave mode and various other internal states.

(14) FLA, FLB (flag register A, B)
... 214$_1$, 214$_2$    4 bits×2
There registers memorize arithmetic/logic operation states.

(15) QR (quotient register)
... 215    16 bits
This register is used as a quotient register to the ALU 220 for arithmetic/logic operations and to the SHF 221 for high speed shifting.

(16) RAR (ROM address register)
... 216    12 bits
This register holds the address of an instruction to be read out next. The address stored in this RAR 216 is transferred through a 12-bit ROM address line to the C-ROM 102. The RAR 216 has a function of counting by "+1" every time a microinstruction is read out.

(17) SLR (subroutine link register)
... 217    12 bits
In this register a return destination address when executing a subroutine in a microinstruction is stored.

(18) A-ROM (internal ROM A)
... 218    12 bits×2
An internal ROM which memorizes the start address of microinstruction executed after the detection of the microinstruction start address after the clearing of system and generation of interruption.

(19) B-ROM (internal ROM B)
...219    12 bits×256
An internal ROM which serves as a table of microinstructions corresponding to user's intruction operation codes (OP codes). It has addresses corresponding to the address (addresses 0 to 255) of the C-ROM 102 and capable of being specified by an OP code section (8 bits) in the IR 202. In each address of the B-ROM 219, decision data as to whether the microprogram corresponding to the OP code ends in one step or requires two or more steps and whether it should be handled as an illegal instruction is stored. In each address of the C-ROM 102 corresponding to each address of the B-ROM 219 for example, in address 0 to 255, the following contents are stored. With a microinstruction that is ended in one step, its microinstruction is stored. With a microinstruction that requires two or more steps, the microinstruction for the first step is stored in the C-ROM 102, and the address of the C-ROM 102 of the microinstruction for the second step is stored in the corresponded address of the B-ROM 219. Further, with an illegal instruction B-ROM 219 produces all "0" s, the start address of a microprogram for error processing is stored.

(20) ALU (arithmetic and logic unit)
... 220
It is a combination logic circuit for binary 16-bit parallel arithmetic and logic operations, and includes a decimal one-digit arithmetic circuit. Operation data from the R-BUS 227$_R$ is directly coupled to the ALU 220, while operation data from the T-BUS 227$_T$ is coupled to the ALU 220 after it is latched in a latch circuit (LATCH). The operation result is output to the T-BUS 227$_T$.

(21) SHF (shifter)
... 221
It is a hardware shifter which effects shift left circular or shift right circular of 1 to 15 bits in one cycle. The shift number is specified by the lower 4 bits of the R-BUS 227$_R$. The shift number specification from the R-BUS 227$_R$ is directly coupled to the SHF 221, and data from the T-Bus 227$_T$ is coupled thereto through the latch circuit (LATCH). The result of shift is output to the T-BUS 227$_T$.

(22) MUL (multiplier)
... 222
It is a high speed multiplier of 16 by 16 bits. Data from the T-BUS 227$_T$ and R-BUS 227$_R$ are coupled to it, and of the multiplication result of a double digit length the upper part is transferred to a MRH register and the lower part to a MRL register. In practice, the MRH and MRL are imaginary registers and not physically present, and their equivalent is assembled in the MUL 222.

(23) DECODE & CONT (decoder and controller)
... 223

It serves as a decoder and control circuit for decoding microinstructions stored in the MIR 201 to obtain various control signals. In addition to the output of the MIR 201, other predetermined signals are also coupled for decoding to obtain control signals.

(24) XSGN (external signal register)
... 224    12 bits

In this register, the external signal group (12 bits) of TEST 1, coupled through the C-BUS 103 together with a microinstruction read out from the C-ROM 102, is stored. The content of the XSGN 224 is transferred to the DECODE & CONT 223. Of the external signal group TEST 1 externally taken out and coupled to the XSGN 224 through the C-BUS 103, the AM signal output from the AM-LOG 300 may be directly coupled to the C-BUS 103 together with the other external signals of TEST 1 or indirectly coupled at a different timing. More particularly, when making access to the main memory of the one-chip CPU 101 for fetching an operand, it is coupled to the XSGN 224 at a previously assigned position thereof like the other external signals of TEST 1, and when making access for fetching an instruction it is buffered in the $AM_{0-3}$ 203x in a fixed correspondence in relation to the instruction taken out at that time (i.e., instruction prefetched). Subsequently, the corresponding instruction is read out from the $IB_{0-3}$ 203, followed by reading out from the $AM_{0-3}$ at the timing of coupling to the IR 202 (i.e., IBE timing) and storing in the XSGN 224 at a previously assigned position thereof. Once the AM memory bit position of the XSGN 224 is set by the AM signal (AM= "1"), it is not reset by the subsequent AM signal level change to "0" but is restored to the reset state only by a reset command of a particular microinstruction. Also, of the external signal group TEST 1 coupled to the XSGN 224, the PBE (physical block error) signal (of one bit) produced from the address conversion unit 105 is not directly output to the C-BUS 103 but is once buffered in the $PBE_{0-3}$ 203y in a fixed correspondence relating to the prefetched instruction and then stored in the XSGN 224 at a predetermined position thereof at the timing, at which the instruction (fetched in advance) stored in the corresponding buffer ($IB_i$) in the $IB_{0-3}$ 203 is registered in the $IR_{202}$. The PBE memory bit of the XSGN 224, when set by the PBE signal (PBE= "1"), is not reset when this signal is subsequently changed to "0" but is reset by a particular reset command.

(25) MODE (mode register)
... 225    12 bits

This register stores the external signal group (12 bits) TEST 0 coupled through the C-BUS 103 in microinstructions read cycle at the time of the initial control operation. The content of this MODE 225 is transferred to the DECODE & CONT 223.

(26) MER (memory control register)
... 226    8 bits

This register stores memory control system data (of 8 different kinds) output from the DECODE & CONT 223. The content of the MER 226 is output through the C-BUS 103 together with the contents of the MAR 206 and $SGA 207_1$.

(27) T-BUS, R-BUS (transfer bus, receiver bus)
... $227_T$, $227_R$

The T-BUS $227_T$ is an internal bus capable of permitting bi-directional data transfer, and the R-BUS $227_R$ is an internal bus capable of permitting only unidirectional data transfer. Both the buses have a 16-bit width and mainly serve for data transfer between registers inside the one-chip CPU 101.

The one-chip CPU 101 further includes a NOR gate 308 which constitutes the subject matter of the invention, a flip-flop (hereinafter referred to as FF) 309 and a prefetch control mechanism (not shown). The NOR gate 308 receives the output (16 bits) of the ALU 220 and a check timing signal CHCK (logical level "0" at the time of checking), and its output is coupled to a set terminal S of the FF 309. The FF 309 is set in response to the output signal of logic "1" from the NOR gate 308 and produces an instruction buffer empty signal IBE. The instruction buffer empty signal IBE is coupled to an instruction prefetch control mechanism, whereby successive user's instructions are buffered from the main memory MM to the $IB_{0-3}$ 203. At this time (i.e., at the instant of the end of instruction fetch cycle) the FF 309 is reset. It is also reset when the $IB_{0-3}$ 203 becomes empty as a result of execution of a microinstruction having a parameter for ending instruction decoding and when the $IB_{0-3}$ 203 becomes empty as a result of execution of a microinstruction for specifying the $IB_{0-3}$ 203 as a source register. It is set as a result of execution of a microinstruction for specifying the LOC register 208 as destination register when branching is established due to execution of a branch command of an user's instruction and also when the destination is changed with the occurrence of an interruption.

External input and output signals appearing at terminals (connection pins) of the one-chip CPU 101 exclusive of those through the C-BUS 103 and ROM address line RAL (12 bits) are as follows.

(1) ROE (ROM output enable)

A signal for taking out a micoinstruction read out from the C-ROM 102 through the C-BUS 103. It is also used as a gate control signal for separating the inside and outside of the C-BUS 103 and as a timing signal for taking out the external signal group (TEST 0 or TEST 1) through the C-BUS 103.

(2) PSEL (processor select)

A signal indicating that the one-chip CPU is occupying the memory bus.

(3) MA (memory address)

A signal indicating that the signal on the C-BUS 103 is a memory address of the main memory. According to this signal the memory address can be latched in the latch circuit A-LATCH 107.

(4) SYCNT (system control)

A timing signal for latching (or releasing) a control signal input to of the external addressable latch circuit $104_1$.

(5) IOCNT (I/O control)

A timing signal for latching (or releasing) a control signal input to the external addressable latch circuit $104_2$.

(6) CNTD (control data)

A signal for controlling the setting and resetting of the addressable latch circuits $104_1$ and $104_2$. When this signal is "1", the 8 flip-flops in each of the latch circuits $104_1$ and $104_2$ are selectively set on the basis of the decoded value of the signal from the $sel_{0-2}$ at the timing of the corresponding CNT signal (SYCNT or IOCNT), while they are selectively reset when the signal is "0".

(7) $SEL_{0, 1, 2}$ (select)

A 3-bit select signal for selecting the flip-flops of the addressable latch circuits $104_1$ and $104_2$ (8 flip-flops for each) or a decoder input signal.

(8) SYN (synchronous)

A response signal from I/O (input/output unit). From this signal the presence of a counterpart unit (I/O) can be confirmed.

(9) REQ (request)

A signal produced when a memory cycle is requested on the direct memory access unit (for example I/O input connected to I/O bus).

(10) EN (enable)

An enable signal which is returned to the direct memory access unit side when a request signal REQ is received from the direct memory access unit side.

(11) BBSY (bus busy)

This signal is one of the memory control signal and used as a start/end signal for a main memory.

(12) MEAN (memory access end)

A signal produced when the registering of the data on the memory bus MDL in the main memory is ended.

(13) ERR (error)

An error signal which is coupled on a time division basis at the time of generation of PE (parity error), PRTE (protect error), PBE (conversion table non-definition error), etc.

(14) SCLR (system clear)

An initialization signal for initializing predetermined internal registers.

(15) STB (strobe)

A main strobe signal, at the timing of which the generation of the memory control system signal is controlled.

(16) EBCLK (basic clock)

A basic clock supplied from the clock generator 106. On the basis of this clock EBCLK an internal clock signal is produced in the DECODE & CONT 223.

(17) VDD, GND

Working DC voltages supplied from an external power supply (VDD= +5 V, GND= 0 V)

Now, part of the construction outside the one-chip CPU 101 will be described. Of the addressable latch circuits $104_1$ and $104_2$ provided outside the one-chip CPU 101 the circuit $104_1$ mainly produces 8 different external control signals (EXA) for console system according to the aforementioned signals CNTD, SYNCT and $SEL_{0-2}$, and also mainly produces 8 different external control signals EXB for I/O system according to the signals CNTD, ICONT and $SEL_{0-2}$. Of these external control signals (exa and EXB) the signals (15 signals) EXA exclusive of a TEST signal are irrelevant to the invention, and their description is omitted. The TEST signal produced from the addressable latch circuit $104_1$ specifies either TEST 0 or TEST 1 which is coupled together with a microinstruction (20 bits) produced from the C-ROM 102 through the C-BUS 103 to the one-chip CPU 101. When the TEST signal is at logical level "1", TEST 1 is selected, and when it is at logical level "0", TEST 0 is selected. More particularly, when the TEST signal is "1", an inverter $INV_1$ which inverts the ROE signal, the effective level of which is "0", produces a "1" output. Thus, a "1" signal is coupled through an AND gate $A_1$ to open the gate $G_3$, whereby the TEST 1 external signal group (12 bits) is coupled together with a microinstruction (20 bits) read out from the C-ROM 102 through the C-BUS 103 to the one-chip CPU 101. When the TEST signal is at logical level "0", an output signal "1" of an inverter $INV_2$ which inverts this signal and the aforementioned output signal "1" of the inverter $INV_1$ are coupled to an AND gate $A_2$, which thus produces A "1" output signal to open the gate G2, whereby the TEST 0 external signal group (12 bits) is similarly coupled through the C-BUS 103 to the one-chip CPU 101. The TEST signal is at logical level "0" at the time of the initialization and at logical level "1" at the time of the ordinary microprogram control. Thus, at the time of the initialization the TEST 0 external signal group is coupled to the one-chip CPU 101 in a program read cycle, while at the other time of the ordinary microprogram control the TEST 1 external control signal is similarly coupled to the one-chip CPU 101 in the microinstruction read cycle. The TEST 0 external signal group coupled to the one-chip CPU 101 is stored in the MODE register 225, while the TEST 1 external signal group is stored in the XSGN register 224. The aforementioned AM signal produced from the AM-LOG 300 is contained in the TEST 1 external signal group stored in the XSGN register 224. Also, the PBE signal is contained in the TEST 1 external signal group stored in the XSGN register 224. This PBE signal is output from the conversion table $105_T$ of the address conversion unit 105 at the time of address specification is making access to the main memory is a one-bit signal indicating when the segment (or page) in the conversion table $105_T$ specified by the logic address when obtaining the physical address of the main memory through the consultation with the conversion table $105_T$ according to the logic address data from the one-chip CPU 101 is non-defined, the PBE signal becomes a logical level "1" (not permitting use) and at logical level "0" (permitting use) when defined. While the PBE signal, is coupled together with the other TEST 1 external signals through the C-BUS 103 to the one-chip CPU 101 and stored in the XSGN register 224 in a corresponding bit position in a microinstruction read cycle, it is directly input to the XSGN register 224 not simultaneously with the other TEST 1 signals. More particularly, it is temporarily stored in the $PBE_{0-3}$ 203y which is provided to correspond to the $IB_{0-3}$ 203. At the time of subsequent read and shift of a corresponding user instruction from the $IB_{0-3}$ to the IR 202 the PBE signal is read out from the $PBE_{0-3}$ 203y simultaneously with the corresponding instruction word and coupled to the corresponding bit position of the XSGN register 224. Designated at 107 is an address latch circuit (A-Latch) having a 24-bit construction for latching therein 16-bit logic address data stored in the MAR register 206 and 8-bit segment data stored in the SGA register $207_1$ (or SGB register $207_2$), these data being coupled to the one-chip CPU 101 through the C-BUS 103, according to the MA signal. Designated at 108 is a selector for selecting a memory access unit for accessing the main memory by consulting the conversion table $105_T$. When the one-chip CPU 101 accesses the main memory (when PSEL signal is at logical level "1"), the selector selects the address information obtained from the address latch circuit 107 and when the direct memory access unit accesses the main memory (when the PSEL signal is at logical level "0"), the selector selects the address information sent from the direct memory access unit. Designated at 109 is a memory control signal latch circuit (hereinafter referred to as MCS-LATCH circuit) for latching 8 different (8-bit) memory control system data transferred from the MER register 226 inside the one-chip CPU 101 according to the MA signal produced from the one-chip CPU 101. The contents of the MER register 226 is output in synchronism with the contents (total 24 bits) of the Mar register (206 and SGA register $207_1$ (or SGB register $207_2$). Designated at 110 is a protection table (PT) constituting a memory protection mechanism. Designated at $G_8$ is a gate for permitting the memory protection data to be written in and read from the protection table 110 through the C-BUS 103.

Designated at 111 is a parity circuit for producing parity bit with respect to the memory data and effecting parity check.

Designated at 301 to 305 are component parts of the AM-LOG 300. More particularly, designated at 301 is an address setting switch (A-SW) provided on an operation panel, for instance. Designated at 302 is a latch circuit (SA-LATCH) for latching therein a memory address (logic address) for address match set by the A-SW 301. Designated at 303 is a comparator, which compares the set address latched in the SA-LATCH 302 memory address transferred from the one-chip CPU 101 at the time of making access to the main memory, i.e., the logic address latched in the A-LATCH 107, and produces an AM signal of logic "1" level when and only when the compared addresses coincide. Designated at 304 and 305 are gates for switching the bit width of addresses compared in the comparator 303 when writing in the main memory and when reading. While memory data are handled in the one-chip CPU 101 with the 16 bits (2 bytes) as a unit, the reading of data from the main memory is made with the 32 bits (4) bytes as a unit and the writing of data is made with 16 bits (2 bytes) as a unit. Here, 16 bits are referred to as a half word, and 32 bits are referred to as a full word. On the comparator 303 it is impossible to determine which half word of the data (full word) read out from the main memory is actually requested by the one-chip CPU 101, and therefore the comparator 303 makes comparison with the half word as a unit. More particularly, when writing data in the main memory the address comparison is done is the comparator 303 with $MA_{0-14}$ of the logic address $MA_{0-15}$ (16 bits) ignoring the lower one bit, while when reading data it is done with $MA_{0-13}$ ignoring the lower 2 bits. The aforementioned gates 304 and 305 serve to control the switching of the bit width of the addresses compared. At this time, a WRT signal produced from a memory control signal stored in the MSC-LATCH circuit 109, is coupled to the gates 304 and 305, and it becomes at logical level "1" at the time of writing data in the main memory.

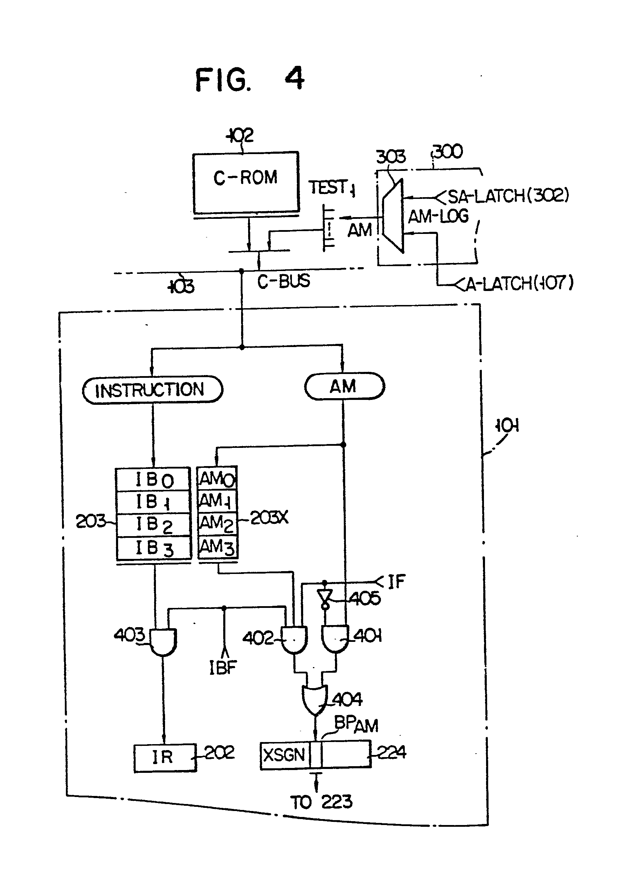

Fig. 4 is block diagram of the AM signal transfer path inside the one-chip CPU 101. In the Figure, designated at 401, 402 and 403 are AND gates, at 404 an OR gate, and at 405 an inverter. IF and IBF signals are both control signals. The IF (instruction fetch) signal is at logical level "1" at the time of fetching an instruction by making access to the main memory of the one-chip CPU 101 and is otherwise at logical level "0". The IBF (instruction buffer fetch) signal is at logical level "1" at the time when an instruction (prefetch instruction) stored in the $IB_{0-3}$ 203 is transferred to the IR 202 and is otherwise at logical level "0". As mentioned earlier, the AM signal which is contained in the TEST 1 external signal group, coupled together with a microinstruction through the C-BUS 103 to the one-chip CPU 101, is registered in the XSGN register 224 at different timings at the time of operand fetch and at the time of instruction fetch. At the time of operand fetch, the AM signal is directly coupled together with the other TEST 1 signals through the C-BUS 103 to the XSGN register 224, while at the time of the instruction fetch it is temporarily stored in the $AM_{0-3}$ 203x and is coupled to the XSGN register 224 from the $AM_{0-3}$ 203x at the timing at which the corresponding user instruction is fetched from the $IB_{0-3}$ 203. At the time of operand fetch, at which the IF signal becomes at logical level "0", the AND gate 401 is controlled to open by the AM signal since the output of the inverter 405 becomes at logical level "1". Then, the AM signal coupled to the one-chip CPU 101 is immediately coupled through the AND gate 401 and OR gate 404 to the XSGN register 224 at the corresponding bit position $BP_{AM}$ thereof. On the other hand, at the instruction fetch time, at which the IF signal is at logical level "1", the AND gate 401 is closed, and the AM signal coupled to the one-chip CPU 101 is temporarily stored in a bit position $(AM_I)$ of the $AM_{0-3}$ 203x corresponding to a buffer $(IB_I)$ of the $IB_{0-3}$ 203 where the fetched user instruction is stored. The AM signal thus stored in the bit position $(AM_I)$ is coupled through the AND gate 402 and OR gate 404 to the corresponding bit position $BP_{AM}$ of the XSGN register 224 at the timing at which the user instruction stored in the corresponding buffer $(IB_I)$ of the $IB_{0-3}$ 203 is fetched therefrom and coupled through the AND gate 403 to the IR 202 for registration therein according to the IBF signal (logical level "1").

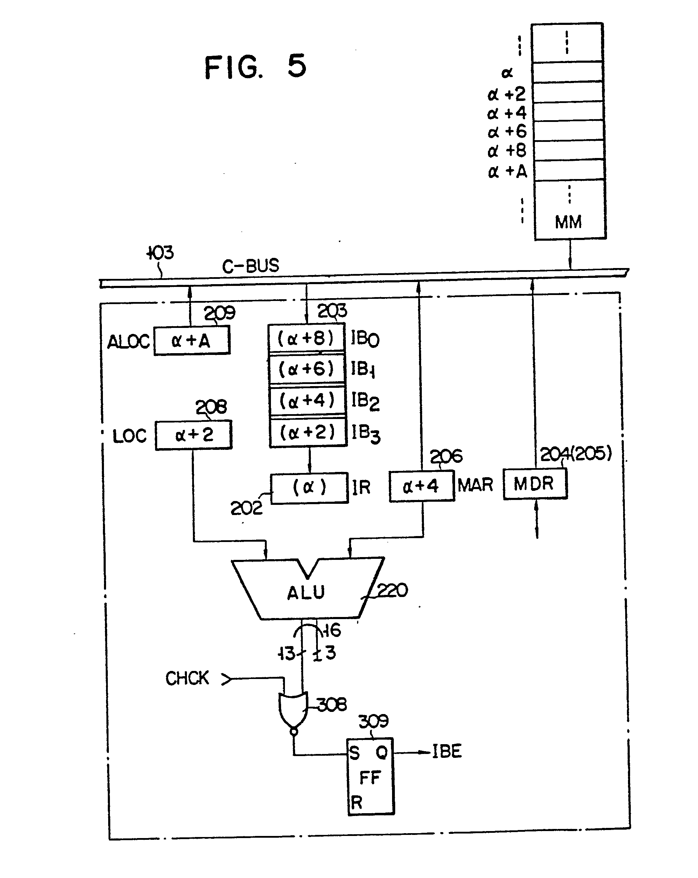

Now, the operation of the construction of Fig. 3 will be described with reference to a state diagram of Fig. 5. Fig. 5 shows an example of various parts of the circuit of Fig. 3 having direct bearing upon the invention in a state when a write instruction to the main memory MM is produced (state in which instruction and location are accommodated). It is assumed that the contents in the addresses $(\alpha+8)$, $(\alpha+6)$, $(\alpha+4)$ and $(\alpha+2)$ of the main memory MM, having been prefetched, are stored as 16 bits (2 bytes) each in the $IB_{0-3}$ 203. At this time, the FF 309 is thus in the reset state. Also, the user's instruction being executed, i.e., the content in address $\alpha$ of the main memory MM, is held in the IR register 202. It is assumed that the content in the address $\alpha$ mentioned above is a write instruction (i.e., store instruction) with respect to the main memory MM. Further, in the LOC counter 208 the location of the user's instruction to be executed next, i.e., the address $(\alpha+2)$ of the main memory MM, is held, and in the ALOC counter 209 the location of the next user's instruction to be prefetched, i.e., the address $(\alpha+A)$ of the main memory MM, is held. Further, in the MAR register 206 an address of the main memory MM, for instance address $(\alpha+4)$, to be written in the execution of the user's instruction (i.e., content in the address $\alpha$) held in the IR 202 is held.

In the mean time, a microprogram for executing the write instruction (user's instruction), used in the instant embodiment, will be described with reference to Fig. 6. Fig. 6 shows an example of the microprogram. A microinstruction stored in the address $\beta$ of the C-ROM 102 is a write instruction for loading the content of the $WR_2$ register of the $WR_{0-7}$ 211 in the MDR register (which is not actually present and substituted for by the MDRH register 204 and MDRL register 205) and writing it in a predetermined address of the main memory MM (in the instant embodiment the address $(\alpha+4)$ held in the MAR register 206 through the C-BUS 103. Usually, a major proportion of microinstructions that follow this write instruction are non-operational instructions. For this reason, in the embodiment instructions for comparison only with the ALU 220 to be described later are prepared as microinstructions following the aforementioned write instruction.

A microinstruction stored in the address $(\beta+1)$ of the C-ROM 102 has a construction for the following execution. During the execution of this microinstruction, during which the memory write operation is also in force, the content of the MAR register 206 is output to the T-BUS $227_T$, and the content of the LOC counter 208 is output to the R-BUS $227_R$. The ALU 220 executes the subtraction $[(MAR)—(LOC)]$ of the content of the LOC counter 208 coupled through the R-BUS $227_R$ from the content of the MAR register 206 coupled through the T-BUS $227_T$ and outputs the result to the T-BUS $227_T$. As a result, the signal of the upper 13 bits on the T-BUS $227_T$ are coupled to the NOR gate 308. Meanwhile, the check timing signal CHCK (logic "0") is coupled at a predetermined timing to the NOR gate 308. Thus, whether the signal of the upper 13 bits of the value $[(MAR)—(LOC)]$ are all at logical level "0" is checked through the execution of the afore-mentioned microinstruction. If all the bits are at logical level "0", the NOR gate 308 produces an output signal of logic level "1".

Meanwhile, it will be obvious that the NOR gate 308 produces the logic level "1" output signal when and only when the result of the subtraction, i.e., the value of $[(MAR)—(LOC)]$ is "OOOOOOOOOOOOOXXX"$_2$ (X being either "0" or "1"). The lower 3 bits ("XXX"$_2$) here can take any value between the minimum value "000"$_2$ (which is decimal 0) and the maximum value "111"$_2$ (which is decimal 7). Thus, it will be seen that the NOR gate 301 produces the logic "1" output signal when $0 \leq (MAR)—(LOC) < 8 = 2^3$.

The output (of logic level "1") of the NOR gate 308 is coupled to the set terminal S of the FF 302, which thus produces an effective instruction buffer empty signal IBE. As a result, the content of the $IB_{0-3}$ buffer 203 is interchanged through the C-BUS 103 by a buffer empty control mechanism (not shown).

As is shown, in the instant embodiment if the condition $0 \leq (MAR)—(LOC) < 8 = 2^3$ is satisfied at the time of the generation of the write instruction with respect to the main memory MM, the content of the $IB_{0-3}$ 203 is made ineffective by determining that the main memory address content has been buffered in the $IB_{0-3}$ 203. Thus, with the address $(\alpha+4)$ specified by the MAR register 206 as shown in Fig. 5, (MAR)—(LOC)=6, and the content of the $IB_{0-3}$ buffer 203 is made ineffective. Now, the basis, on which the content of the $IB_{0-3}$ buffer 203 is made ineffective when $0 \leq (MAR)$ —$(LOC)<8=2^3$, will be discussed in detail with reference to Fig. 5. It will be seen from the Figure that the content of the $IB_{0-3}$ buffer 203 must be made ineffective when the address specified by the MAR register 206 coincides with one of the addresses $(\alpha+2)$ and $(\alpha+9)$ of the main memory MM that corresponds to the user's instruction prefetched in the $IB_{0-3}$ buffer 203. In the LOC counter 208, the location (address $(\alpha+2)$) of the next user's instruction to be executed is held. Thus, the content of the $IB_{0-3}$ buffer 203 is made ineffective when the subtraction value $[(MAR)$ —$(LOC)]$ between the contents of the MAR register 206 and LOC counter 203 is $(\alpha+2)—(\alpha+2) \leq (MAR)—(LOC)<(\alpha+A)—(\alpha+2)$; that is,

$$0 \leq (MAR)—(LOC)<8 \qquad (1)$$

Re-writing the formula (1) we obtain

$$0 \leq (MAR)—(LOC)<2^3 \qquad (2)$$

as mentioned above. Thus, with the instant embodiment the substraction $[(MAR)—(LOC)]$ can be executed with the ALU 220 as discussed in detail before, and the decision as to formula (2), i.e., decision as to whether the content of the $IB_{0-3}$ buffer 203 is to be made ineffective, can be obtained without provision of any discriminating means (either hardward or softward) regarding the result of subtraction but with the NOR gate 308 alone. This means that with the instant embodiment a high performance unit can be obtained as the one-chip CPU without need of increasing any hardware, i.e., without increasing the chip area.

Now, the case when the content of the $IB_{0-3}$ buffer 203 is made ineffective with the occurrence of branching (conditional jump) will be·discussed. When branching is established with the execution of a branch command (a conditional jump instruction) in a user's instruction, the flow of the program is changed, and thus the instructions prebuffered (i.e., content of the $IB_{0-3}$ buffer 203) are made ineffective. They are also made ineffective when the destination is changed by a non-conditional jump instruction.

In this embodiment, when the branch command is executed, for example, the branch address is set in both LOC counter 208 and MAR register 206. ALU 220 computes "(MAR)—(LOC)" and determines whether $0 \leq (MAR)—(LOC)<8$ is satisfied. Since $(MAR)—(LOC)=0$ in this case, ALU 220 supplies logic "0" signal to NOR gate 308. And then, a logic "1" signal from NOR gate 308 is supplied to FF 309. Therefore, FF 309 is set to thereby produce an effective instruction buffer empty signal IBE. Therefore, an instruction stored in a location designated by the branch address is read out from main memory MM in accordance with the branch address in MAR register 206 and the segment address in SGA register 207, and set in IR register 202 through $IB_{0-3}$ buffer 203. This instruction fetch renders LOC counter 208 to be incremented by "+2". Thus, LOC counter 208 indicates an address indicating the location of the next instruction subsequent to the instruction set in IR register 202. Thereafter, the instruction prefetch is performed using the contents of LOC counter 208 and ALOC counter 209, and the interchange of the content of the $IB_{0-3}$ buffer 203 is effected.

While in the above embodiment the decision as to formula (2) for zero check has been done by ignoring the lower 3 bits in the result of substraction in the ALU 220 and introducing the remaining upper bits into the NOR gate 308, it is also possible to permit the decision with respect to formula (1) to be carried out by providing a discriminating means. This is obviously advantageous compared to a means using a comparator although there is a disadvantage that hardware is somewhat increased compared to the above embodiment. Besides, since more strict decision can be expected compared to the above embodiment as will be discussed later, there is no probability of excessively effecting the interchange of the content of the $IB_{0-3}$ buffer 203.

Further, while in the above embodiment four buffer stages each having a capacity of 2 bytes have been provided as the $IB_{0-3}$ buffer 203, this is by no means limitative. In general, where M buffer stages each having a capacity of N bytes, decision as to

$$0 \leq (MAR)—(LOC)<M \times N \qquad (3)$$

may be done. Also, where the discriminating means in the above embodiment (i.e., the NOR gate 308) is used, the instruction buffer content may be made ineffective when there holds a condition

$$0 \leq (MAR)—(LOC)<L=2^m$$

$$(m \text{ being an integer}) \qquad (4)$$

where L is a certain value satisfying $M \times N \leq L=2^m$. In this case, only the upper bits of the subtraction result exclusive of the lower m bits can be led to the NOR gate 308 for the decision. With this means, although any discriminating means is needed, it is likely that the interchange of the instruction buffer content is done more than is necessary when it is necessary to use a value L satisfying $M \times N<L$ depending upon the value of $(M \times N)$, that is, the decision content is liable to be less strict. However, even if interchange of the instruction buffer content is done more than necessary, it would not result in any malfunction at all and need not be concerned about.

Further, while in the above embodiment the subtraction $[(MAR)—(LOC)]$ has been executed with the ALU 220, it is also possible to provide a subtractor for this subtraction. In this case, it is possible to obtain a great advantage that VLSI can be realized over the means using two comparators, although some increase of hardware is necessary. Although a subtractor is practically the same as two comparators in the number of circuits that are involved, in the latter case the realization of VLSI encounters difficulties in the wiring.

Now, the operation of address detection and address stopping by address matching will be described. When a memory address (logic address), the address stopping of which is desired, is set by the address setting switch 301 of the AM-LOG 300, it is latched in the SA-LATCH 302. When the address data transferred from the one-chip CPU 101 through the C-BUS 103 is stored in the A-LATCH 107 at the time of making access to the main memory of the one-chip CPU 101 as mentioned earlier, the set address stored in the SA-LATCH 302 and the logic address stored in the A-LATCH 107 are compared in the comparator 303 of the AM-LOG 300. At this time, when reading data from the main memory the WRT signal becomes at logical level "0" so that the gates 304 and 305 are closed. In this case, of the address data $MA_{0-15}$ only the data $MA_{0-13}$ exclusive of the lower two bits is compared. When writing data in the main memory, the WRT signal is at logical level "1" so that the gates 304 and 305 are open. In this case, of the address data $MA_{0-15}$ only the data $MA_{0-14}$ exclusive of the lower one bit is compared. If the compared addresses in the comparator 303 coincide, an AM signal of logical level "1" is produced while they do not coincide a signal of logical level "0" is produced. This AM signal is given to the TEST 1 external signal input terminal and is coupled together with the microinstruction read out from the C-ROM 102 and other signals in the TEST 1 external signal group through the C-BUS 103 to the one-chip CPU 101 in the aforementioned microinstruction read cycle after the transfer of memory address data from the one-chip CPU 101. The microinstruction coupled to the one-ship CPU 101 is stored in the MIR register 201. While the TEST 1 external signal group is stored in the XSGN register 224, the AM signal is either stored in the XSGN register 224 together with the other TEST 1 external signals or stored in the $AM_{0-3}$ 203x. More particularly, when access to the main memory of the one-chip CPU 101 made for fetching an operand, at which time the IF signal shown in Fig. 4 is "0", the AM signal on the C-BUS 103 is coupled through the AND gate 401 and OR gate 404 to the XSGN register 224 and stored therein together with the other TEST 1 external signals. When access to the main memory of the one-chip CPU 101 is made for fetching an instruction (i.e., for instruction prebuffering), at which time the IF signal is at logical level "1", the AND gate 401 is closed, the AM signal on the C-BUS 103 is not coupled to the XSGN register 224 but instead is stored in the $AM_{0-3}$ 203x. At this time, the AM signal is stored in the $AM_{0-3}$ 203x at a bit position ($AM_i$) thereof corresponding to the buffer position ($IB_i$ of the $IB_{0-3}$ where a corresponding user instruction is stored. Also, at this time the user instruction read out from the main memory in the memory data transfer cycle (i.e., instruction prefetched) is coupled through the C-BUS 103 to the one-chip CPU 101 and stored in the aforementioned buffer position ($IB_I$) of the $IB_{0-3}$ 203. It is to be noted that at the time of pre-fetching instruction, the instruction word prefetched and the corresponding AM signal are always stored in the $IB_{0-3}$ 203 and $AM_{0-3}$ 203x respectively in a fixed corresponding relation to each other. The AM signal stored in the $AM_{0-3}$ 203x is taken out at the timing, at which the corresponding instruction word is fetched from the $IB_{0-3}$ 203 (i.e., IBF timing). The instruction word fetched from the $IB_{0-3}$ 203 is stored in the IR 202, and the AM signal fetched from the $AM_{0-3}$ 203x is stored in the XSGN register 224 at a corresponding bit position ($BP_{AM}$). As has been shown, at the time of making access to the main memory of the one-chip CPU 101 the AM signal output from the AM-LOG 300 is immediately coupled to the XSGN register 224 in the one-chip CPU 101 when an operand is fetched, while when an instruction is fetched in addition to prefetching and memorizing the corresponding instruction word it is temporarily stored in the $AM_{0-3}$ 203x and coupled to the XSGN register 224 at the timing at which the corresponding instruction word is transferred to the IR 202. If the AM signal given to the XSGN register 224 is at logical level "1", an interruption is immediately produced for address stop, whereby the execution of the instruction having been in force is stopped. In the above way, upon detection of the coincidence of addresses (i.e., AM="1") when fetching an operand in the instruction under execution the address stop is immediately brought about (for the operand is not buffered but executed), while upon detection of the address coincidence when fetching an instruction, the address stop is brought about at the timing at which the prefetched instruction is transferred to the IR 202 for execution.

Now it will be described how to interrupt data access between the main memory and the one-chip CPU 101 when the one-chip CPU 101 designates an illegal address.

To give the one-chip CPU 101 an access to the main memory thereby to prefetch an instruction from the main memory, an 8-bit memory control data is supplied through the C-BUS 103 from the MER 226 together with a 24-bit memory address data. The 24-bit memory address data consists of a 16-bit main memory logic address data which is stored in the MAR 206 of the one-chip CPU 101 and an 8-bit segment data which is stored in the SGA $207_1$ or SGB $207_2$ for expanding logic address space. When the 8-bit memory control data and the 24-bit memory address are supplied via the C-BUS 103, no ROE signal is produced and an MA signal of "0" logic level is produced. Thus, the 24-bit memory address data is supplied via the gate circuit $G_4$ and latched by the address latch circuit 107, whereas the 8-bit memory control data is latched by the memory control signal latch circuit 109. As a result, a part of the logic address data stored in the latch circuit 107 is supplied to the address conversion table $105_T$ through the selector 108. Table indexing is then carried out, thus effecting logic-to-physical address conversion. More specifically, the address data from the selector 108 designates a segment, and the contents of the segments thus designated are delivered from the table $105_T$. The output data of the table $105_T$ is combined with the logic address data stored in the latch circuit 107, thus providing a physical address data which designates the address where there will be stored the instruction which is designated by the one-chip CPU 101 and which is to be prefetched. The physical address data is supplied to the main memory via the memory address line MAL.

At the time of the consultation with the conversion table $105_t$, the one-bit PBE signal showing whether the specified segment is non-defined is produced from the conversion table $105_T$. This PBE signal is coupled together with the microinstruction read out from the C-ROM 102 and other TEST 1 external signals through the C-BUS 103 to the one-chip CPU 101 in the aforementioned microinstruction read cycle after the memory address transfer. The microinstruction coupled to the one-chip CPU 101 is stored in the MIR register 201, while the TEST 1 external signal group except for the PBE signal is stored in the XSGN register 224. The PBE signal is registered in the $PBE_{0-3}$ 203y at a bit position (i) thereof corresponding to the buffer position ($IB_i$ where the corresponding instruction word is stored. Meanwhile, in the main memory physical address data having been transferred thereto through the memory address line MAL is read out, and also an instruction word is read out from a memory address corresponding to the address specified by the one-chip CPU 101 with access made under the control of a control signal from the one-chip CPU 101 or the like. The instruction word read out from the main memory is output through the memory data line MDL and gates $G_5$ and $G_4$ to the C-BUS 103 and thence coupled to the one-chip CPU 101 and stored in a buffer ($IB_i$) of the $IB_{0-3}$ 203 in the memory data transfer cycle following the microinstruction read cycle. In the above way, the prefetching of an instruction and accompanying buffering of PBE signal are effected, and the PBE signal corresponding to the prefetched instruction word is always held in a fixed correspondence relation thereto. When the next instruction word is fetched from the $IB_{0-3}$ 203 and registered in the IR 202 after the end of the execution of the user instruction in the IR register 202, the corresponding bit content (PBE signal) in the $PBE_{0-3}$ 203y simultaneously with the fetching of the instruction word, and it is stored in the XSGN register 224 at a corresponding bit position thereof. If the PBE signal coupled to the XSGN register 224 at this time is at logical level "1", the interruption generation mechanism is actuated to bring about an interruption. In this way, an illegal address interruption can be produced at the timing at which the prefetched instruction is actually registered in the IR 202.

While in the above embodiment the PBE signal output from the address conversion table $105_T$ is coupled through the TEST 1 external signal terminal to the C-BUS 103 and thence together with the microinstruction to the one-chip CPU 101, it is also possible to permit the PBE signal to be written in together with such external signals as PE and PRTE through ERR terminal on a time division basis. Even in this case, the PBE signal can be coupled to the one-chip CPU 101 without need of assigning any peculier external connection pin for coupling the PBE signal.

## Claims

1. An information processing system consisting of an arithmetic control unit formed on one chip, said unit comprising:
—means for prefetching a plurality of user instructions from an external main memory;
—a plurality of instruction buffers (203) for storing the user instructions prefetched from the main memory;
—an instruction register (202) coupled to said plurality of instruction buffers for holding a user's instruction being executed;
—first and second subordinary means (203X, 203Y) associated with the respective instruction buffers (203) for storing test signals received via a common bus (103) and external gate means (G3) from external devices (300 and 105_T);
—an external signal register XSGN (224) for also storing said test signals, said external signal register being connected to decode and control means (223);
said information processing system further consisting of:
—a fist means ($105_T$) external to said arithmetic control unit for generating a first test signal (PBE) when the main memory is accessed and a user instruction is prefetched into a respective instruction buffer, said first test signal indicating whether the access of the main memory is legal, said signal being stored in the respective register of the first subordinary means (203X), said external signal register XSGN (224) reading said buffered first test signal when the corresponding user instruction is read into the instruction register (202);
so to produce an illegal address interruption when the access made to the main memory was inadequate, the information processing system further consisting of:
—a second means (300) external to said arithmetic control unit and including means (301) for designating an address for address matching, and further including a comparator (303) for comparing said address with the memory address for accessing the main memory and for producing a second test signal (AM) if there is a match, said second test signal being stored in the respective registers of the second subordinary means

(203X), said external signal register XSGN (224) reading such a buffered match signal (AM) when the corresponding user instruction is read into the instruction register (202), so to stop the operation when a match has occurred, said arithmetic control unit directly reading the first and second test signals into said external signal register XSGN (224) when said main memory is accessed for an operand.

2. An information-processing system according to claim 1, wherein said first means comprises an external address conversion table $(105_T)$ which produces said first test signal (PBE).

**Patentansprüche**

1. Informationsverarbeitungssystem aus einer auf einem Chip ausgebildeten arithmetischen Steuereinheit mit:

—einer Einrichtung zum Vorabrufen einer Vielzahl von Benutzerbefehlen aus einem externen Hauptspeicher;

—einer Vielzahl von Befehlspuffern (203) zum Speichern der aus dem Hauptspeicher vorabgerufenen Benutzerbefehle:

—einen mit der Vielzahl von Befehlspuffern gekoppelten Befehlsregister (202) zum Halten eines gerade ausgeführten Benutzerbefehles;

—ersten un zweiten, den jeweiligen Befehlspuffern (203) zugeordneten Hilfseinrichtungen (203X, 203Y) zum Speichern von Testsignalen, die über einen gemeinsamen Bus (103) und eine externe Gattereinrichttung (G3) von externen Vorrichtungen (300 und $105_T$) empfangen sind;

—einem esternen Signalregister XSGN (224) ebenfalls zum Speichern der Testsignale, wobei das externe Signalregister mit einer Decodier-und Steuereinrichtung (223) verbunden ist;

wobei das Informationsverarbeitungssystem außerdem besteht aus:

—einer zur arithmetischen Steuerinheit externen ersten Einrichtung $(105_T)$ zum Erzeugen eines ersten Testsignales (PBE), wenn ein Zugriff auf den Hauptspeicher erfolgt und ein Benutzerbefehl in einen jeweiligen Befehlspuffer vorabgerufen wird, wobei das erste Testsignal anzeigt, ob der Zugriff zu dem Hauptspeicher legal ist, wobei dieses Signal in dem jeweiligen Register der ersten Hilfseinrichtung (203X) gespeichert wird und wobei das externe Signalregister XSGN (224) das gepufferte erste Testsignal ausliest, enn der Entsprechende Benutzerbefehl in das Befehlsregister (202) eingelesen wird;

um so eine illegale Adreßunterbrechung zu liefern, wenn der zum Hauptspeicher erfolgte Zugriff unangemessen war, wobei das Informationsverarbeitungssytem außerdem besteht aus:

—einer zweiten, zur arithmetischen Steuereinheit externen Einrichtung (300) mit einer Einrichtung (301) zum Bezeichnen einer Adresse zur Adreßanpassung und weiterhin mit einem Vergleicher (303) zum Vergleichen der Adresse mit der Speicheradresse für einen Zugriff auf den Hauptspeicher und zum Erzeugen eines zweiten Testsignales (Am), wenn eine Übereinstimmung besteht, wobei das zweite Testsignal in den jeweiligen Registern der zweiten Hilfseinrichtung (203X) gespeichert wird, wobei das externe Signalregister XSGN (224) ein derartiges gepuffertes Anpassungssignal (AM) liest, wenn der entsprechende Benutzerbefehl in das Befehlsregister (202) gelesen wird, um so den Betrieb zu unterbrechen, wenn eine Übereinstimmung eingetreten ist, und wobei die arithmetische Steuereinheit direkt die ersten und zweiten Testsignale in das externe Signalregister XSGN (224) liest, wenn auf den Hauptspeicher ein Zugriff für einen Operanden erfolgt.

2. Informationsverarbeitungssystem nach Anspruch 1, bei dem die erste Einrichtung eine externe Adreßumsetzugstabelle $(105_T)$ umfaßt, die das erste Testsignal (PBE) erzeugt.

**Revendications**

1. Système de traitement de l'information constitué d'une unité de commande arithmétique formée sur une puce, ladite unité comprenant:

—un moyen pour la prélecture d'un ensemble d'instructions d'utilisateur provenant d'une mémoire centrale externe:

—un ensemble de tampons d'instruction (203) pour mémoriser les instructions d'utilisateur prélues en mémoire centrale;

—un registre d'instruction (202) couplé à l'ensemble des tampons d'instruction pour maintenir une instruction de l'utilisateur qui est exécutée;

—des premier et deuxième moyens subordinaires (203X, 203Y) associés aux tampons d'instruction respectifs (203) pour mémoriser des signaux de test reçus par l'intermédiaire d'une bus commun (103) et d'un moyen à porte externe (G3) de dispositifs externes (300 et $105_T$);

—un registre de signaux externe XSGN (224) pour mémoriser également les signaux de test, le registre de signaux externe étant connecté à un moyen de décodage et de commande (223);

le système de traitement de l'information étant constitué en outre de:

—un premier moyen $(105_T)$ extérieur à l'unité de commande arithmétique pour engendrer un premier signal de test (PBE) quand on a accès à la mémoire centrale et qu'une instruction d'utilisateur est prélue par un tampon d'instruction respectif, le premier signal de test indiquant si l'accès à la mémoire centrale est autorisé, le signal étant mémorisé dans le registre respectif du premier moyen subordinaire (203X), le registre de signaux externe XSGN (224) lisant le premier signal de test tamponné quand l'instruction d'utilisateur correspondante est lue dans le registre d'instruction (202);

pour produire ainsi une interruption d'adresse interdite quand l'accès à la mémoire centrale n'était pas approprié, le système de traitement de l'information étant constitué en outre de:

—un deuxième moyen (300) extérieur à l'unité de commande arithmétique et incluant un moyen (301) pour indiquer une adresse pour une correspondance d'adresses, et incluant en outre un

comparateur (303) pour comparer l'adresse à l'adresse de mémoire afin d'avoir accès à la mémoire centrale et pour produire un deuxième signal de test (AM) s'il y a une correspondance, le deuxième signal de test étant mémorisé dans les registres respectifs du deuxième moyen subordinaire (203X), le registre de signaux externe XSGN (224) lisant ce signal de correspondance tamponné (AM) quand l'instruction d'utilisateur correspondante est lue par le registre d'instruction (202), pour arrêter ainsi le fonctionnement quand une correspondance s'est produite, l'unité de commande arithmétique lisant directement les premier et deuxième signaux de test par le registre de signaux externe XSGN (224) quand l'accès à la mémoire centrale est fait pour un opérande.

2. Système de traitement de l'information selon la revendication 1, dans lequel le premier moyen comprend une table de conversion d'adresses externe (105$_T$) qui produit le premier signal de test (PBE).

FIG. 1

MAIN MEMORY

INSTRUCTION
BUFFER

α + 4
α + 6
α + 8
α + A

| α + A |
|-------|
| α + 8 |
| α + 6 |
| α + 4 |

# FIG.  6

ADDRESS                     MICROPROGRAM

$\beta$          L    MDR ,  W2 ,  MW

$\beta+1$        C    GA ,  IB ,  (END)

FIG. 2

# FIG. 3A

EP 0 139 080 B1

FIG. 3B

# FIG. 4

# FIG. 5